Europäisches Patentamt

European Patent Office

Office européen des brevets

(11) Veröffentlichungsnummer: **0 242 641**

**A2**

(12) **EUROPÄISCHE PATENTANMELDUNG**

(21) Anmeldenummer: 87104729.6

(22) Anmeldetag: 31.03.87

(51) Int. Cl.4: **C02F 1/52** , C02F 1/62

(30) Priorität: 05.04.86 DE 3611448

(43) Veröffentlichungstag der Anmeldung:
28.10.87 Patentblatt 87/44

(84) Benannte Vertragsstaaten:
**AT BE CH ES FR GB IT LI LU NL SE**

(71) Anmelder: **Keramchemie GmbH**
**Berggarten 1**
**D-5433 Siershahn(DE)**

(72) Erfinder: **Heimhardt, Hans-Jürgen, Dr.**
**Am Hang 29**
**D-4330 Mühlheim-Saam(DE)**
Erfinder: **Hehl, Werner**
**Lessingstrasse 15**
**D-5433 Siershahn(DE)**
Erfinder: **Allef, Jürgen, Dipl.-Ing.**
**Am Himmelfeld 72**
**D-5430 Montabaur(DE)**

(74) Vertreter: **Kossobutzki, Walter, Dipl.-Ing.**
**Waldstrasse 6**
**D-5419 Helferskirchen(DE)**

(54) **Verfahren zur Behandlung von Abwasser.**

(57) Ein Verfahren zur Behandlung von Abwasser aus der metallverarbeitenden, insbesondere der drahtherstellenden Industrie, das neben den Eisenionen speziell Blei-und/oder Kupferionen enthält, bei dem die Behandlungsprodukte selektiv auf chemisch-physikalischem Wege kontinuierlich erhalten werden.

Das Verfahren besteht aus der Kombination folgender hintereinander ablaufender Merkmale:

a) die Blei-und/oder Kupferionen werden durch Zudosierung einer wäßrigen Sulfidlösung im stark sauren Bereich in einem überstöchiometrischen Verhältnis vorgefällt,

b) die Blei-und/oder Kupferionen werden durch Zudosierung von Kalkmilch oder Natronlauge im schwach sauren Bereich nachgefällt und als Metallsulfidverbindungen abgeschieden und

c) die noch in Lösung befindlichen Eisenionen werden durch weitere Zugabe von Kalkmilch oder Natronlauge bis zum schwach alkalischen Bereich ausgefällt und als Hydroxidverbindungen abgeschieden.

## Verfahren zur Behandlung von Abwasser

Die Erfindung bezieht sich auf ein Verfahren zur Behandlung von Abwasser aus der metallverarbeitenden, insbesondere der drahtherstellenden Industrie, das neben den Eisenionen speziell Blei- und oder Kupferionen enthält, wobei die Behandlungsprodukte selektiv auf chemisch-physikalischem Wege kontinuierlich erhalten werden.

Es ist allgemein bekannt, daß man aus metallionenhaltigen Lösungen mit Natriumsulfit die Metalle entsprechend ihrer Löslichkeit als Sulfide fällen kann. Ferner ist es aus "Hartinger - Taschenbuch der Abwasserbehandlung für die metallverarbeitende Industrie", Band I, 1976, bekannt, dieses Verfahren zur Fällung von Metallkomplexverbindungen zu verwenden.

Es ist in der Abwasserbehandlungstechnik ferner bekannt, die im Abwasser vorhandenen Metalle durch Neutralisation mit Kalkmilch oder Natronlauge zu fällen. Bei der Neutralisation fallen die Metalle gemeinsam, entsprechend ihrer Löslichkeit, aus. Eine selektive Fällung der einzelnen Metalle ist bei einer einzelnen Anwendung der vorgenannten Verfahren im technischen Maßstab nicht möglich.

Es is ferner bekannt, die im Abwasser enthaltenen Metalle selektiv durch elektrolytisch arbeitende Verfahren zu entfernen. Für elektrolytische Verfahren müssen für eine wirtschaftliche Betriebsweise die Metallgehalte entsprechend hoch sein bzw. in aufwendigen Vorstufen aufkonzentriert werden.

Üblicherweise muß heute der bei der Abwasserbehandlung anfallende Schlamm, der Blei-, Kupfer-und Eisenionen enthält, auf Sondermülldeponien gelagert werden. Da der prozentuale Anteil von Blei und/oder Kupfer gegenüber Eisen meist äußerst gering ist, entstehen dabei. sehr hohe Transport-und Lagerkosten.

Der Erfindung liegt deshalb die Aufgabe zugrunde, ein Verfahren zur Behandlung von Abwasser aus der metallverarbeitenden, insbesondere der drahtherstellenden Industrie zu schaffen, durch das die in dem Abwasser neben den Eisenionen enthaltenen Blei-und/oder Kupferionen auch dann, wenn sie nur in geringer Konzentration vorliegen, selektiv und kontinuierlich entfernt werden können.

Zur Lösung dieser Aufgabe wird ein Verfahren mit der Kombination folgender Merkmale vorgeschlagen. Zuerst werden die Blei-und/oder Kupferionen durch Zudosierung einer wäßrigen Sulfidlösung im stark sauren Bereich in einem überstöchiometrischen Verhältnis vorgefällt. Danach werden die Blei-und/oder Kupferionen durch Zudosierung von Kalkmilch oder Natronlauge im schwach sauren Bereich nachgefällt als Metall-Sulfidverbindungen abgeschieden. Schließlich werden die noch in Lösung befindlichen Eisenionen durch weitere Zugabe von Kalkmilch oder Natronlauge bis zum schwach alkalischen Bereich ausgefällt und als Hydroxidverbindungen abgeschieden.

Durch dieses Verfahren ist nicht nur ein Recycling von Blei und Kupfer möglich, sondern es werden erhebliche Kosten bei der Deponierung der Schlämme eingespart. Durch die Eliminierung der wassergefährdeten Schwermetalle wird der Umweltschutz verbessert.

Weitere Merkmale des erfindungsgemäßen Verfahrens sind in den Ansprüchen 2 bis 14 offenbart.

Das erfindungsgemäße Verfahren wird nachfolgend anhand eines Fließbildes für eine Abwasserbehandlungsanlage näher erläutert. Dabei wird das Abwasser, das hier neben den Eisenionen noch Bleiionen enthält, in einer zweistufigen Durchlaufanlage behandelt. In der ersten Behandlungsstufe wird das Blei selektiv gefällt und abgetrennt, während in der zweiten Behandlungsstufe das Eisen aus dem bleifreien Abwasser gefällt und abgetrennt wird.

Das Abwasser wird von den einzelnen Anfallstellen, beispielsweise einer Drahtbehandlungsanlage, in einem Pufferbecken I gesammelt. Zur guten Durchmischung des Abwassers in dem Pufferbecken I ist in demselben mindestens ein nicht dargestellter Mischer angeordnet. Von dem Pufferbecken I wird das Abwasser in die sogenannte erste Behandlungsstufe gefördert. Die erste Behandlungsstufe besteht aus zwei hintereinander angeordneten Fällungsbehältern 2, 3, einem Flockungsbehälter 4, einem Klärer 5 und einem Dünnschlamm-Neutralisationsbehälter 6, dem eine Filterpresse 7 nachgeordnet ist. In dem Fällungsbehälter 2 wird dem Abwasser über eine Leitung 8 eine 5 bis 10%ige wäßrige Natriumsulfidlösung in einem überstöchiometrischen Verhältnis zudosiert und dabei die Bleiionen vorgefällt. Für diese Vorfällung wird ein pH-Wert von 2,0 bis 2,5 eingestellt, der durch eine automatische Zugabe von Kalkmilch erreicht wird. Die Dosierung der Kalkmilch erfolgt über ein pH-gesteuertes Magnetventil, während die Zugabe der wäßrigen Natriumsulfidlösung volumetrisch über eine regelbare Dosierpumpe erfolgt. Auch in dem Fällungsbehälter 2 ist ebenfalls ein Mischer installiert.

In dem Fällungsbehälter 3 werden die Bleiionen des Abwassers durch Zudosierung von Kalkmilch nachgefällt, wobei ein pH-Wert von 4,0 bis 4,5 eingestellt wird. Auch hier erfolgt die Zugabe der Kalkmilch über ein pH-gesteuertes Magnetventil. Der Fällungsbehälter 3 ist ebenfalls mit einem Mischer bestückt.

Dem Fällungsbehälter 3 ist ein Flockungsbehälter 4 nachgeordnet, in dem dem Abwasser ein organisches Flockungshilfsmittel (Polyelektrolyt) zugesetzt wird. Durch die Zugabe dieses Flockungshilfsmittels wird bei gleichzeitiger Durchmischung des Abwassers die Sedimentation verbessert. Von dem Flockungsbehälter 4 strömt das geflockte Abwasser in den Klärer 5. Hier wird das Abwasser beispielsweise im Gegenstrom von unten nach oben durch schräg gestellte Plattenpakete geleitet, in denen eine Trennung in Feststoffe und Klarwasser erfolgt. Das Klarwasser fließt oberhalb der Plattenpakete in seitlich angeordnete Rinnen und von diesen in die zweite Behandlungsstufe, während der im Schlammraum des Klärers 5 abgesetzte Dünnschlamm in einen Dünnschlamm-Neutralisationsbehälter 6 abgepumpt wird. Die dafür vorgesehene Pumpe ist durch einen im Klärer 5 eingebauten Ultraschall-Trennschichtenmelder gesteuert. In dem Dünnschlamm-Neutralisationsbehälter 6 wird der Dünnschlamm durch automatische Zudosierung von Kalkmilch auf einen pH-Wert von 8,5 bis 9,0 eingestellt. Auch hier erfolgt die Zudosierung der Kalkmilch über ein pH-gesteuertes Magnetventil. In dem Dünnschlamm-Neutralisationsbehälter 6 ist ebenfalls ein Mischer installiert. Aus dem Dünnschlamm-Neutralisationsbehälter 6 wird der Dünnschalmm mittels einer Pumpe beispielsweise zu einem nicht dargestellten Nacheindicker und von dort zu einer Filterpresse 7 gefördert. Das in der Filterpresse anfallende Filtrat wird in den Fällungsbehälter 3 gefördert, während der Filterkuchen, der das Blei enthält, z. B. verhüttet werden kann.

Das aus dem Klärer 5 der ersten Behandlungsstufe ablaufende, bleifreie Klarwasser, welches einen pH-Wert von 4,0 bis 4,5 aufweist, wird zur weiteren Behandlung der zweiten Behandlungsstufe zugeführt. Die zweite Behandlungsstufe besteht aus einem Neutralisationsbehälter 9, einem Flockungsbehälter 10, einem Klärer 11 und einer nachgeordneten Filterpresse 12.

In dem Neutralisationsbehälter 9 wird zunächst durch Zudosierung von Kalkmilch das bleifreie Abwasser auf einen pH-Wert von 8,5 bis 9,0 eingestellt, der eine optimale Fällung der Eisenionen gewährleistet. Auch hier erfolgt die Zudosierung der Kalkmilch über ein pH-gesteuertes Magnetventil. Zur Durchmischung des bleifreien Abwassers und zur Oxidation von dreiwertigem Eisen zu zweiwertigem Eisen ist in dem Neutralisationsbehälter 9 ein Belüftungsmischer angeordnet. Von dem Neutralisationsbehälter 9 fließt das von Blei befreite Abwasser in den Flockungsbehälter 10, in dem es mit einem organischen Flockungshilfsmittel (Polyelektrolyt) versetzt wird. Auch hier wird durch die Zugabe des Flockungshilfsmittels eine Vergrößerung der Hydroxidflocken und somit eine bessere Sedimentation erreicht. Die Zugabe des Flockungshilfsmittels erfolgt über eine regelbare Dosierpumpe. Von dem Flockungsbehälter 10 gelangt das neutralisierte und geflockte Abwasser in einen Klärer 11, der in gleicher Weise wie der Klärer 5 ausgebildet ist. Das Klarwasser fließt auch hir durch seitlich oberhalb der Platten angeordneten Rinnen ab und zu einem nicht dargestellten Endkontrollbehälter, in dem der pH-Wert nochmals überprüft wird. Bei Über-oder Unterschreitung eines einstellbaren Sollwertes wird ein optischer und/oder akustischer Alarm ausgelöst.

Der im Schlammraum des Klärers 11 abgesetzte Dünnschlamm kann beispielsweise über einen nicht dargestellten Nacheindicker zu der filterpresse 12 gepumpt werden. Das hier anfallende Filtrat wird zum Pufferbecken 1 geführt, während der entwässerte Filterkuchen zu einer Deponie abtransportiert wird.

Die Fällungsbehälter 2, 3, der Flockungsbehälter 4, der Klärer 5 und der Dünnschlamm-Neutralisationsbehälter 6 sind geschlossen ausgebildet und an eine gemeinsame Absaugleitung 13 angeschlossen, die ihrerseits in einen Wäscher 14 mündet. Hier wird die Abluft durch eine alkalischoxidative Gaswäsche behandelt, bevor sie in die Atmosphäre abgelassen wird. Zumindest ein Teilstrom des Waschwassers wird dem Neutralisationsbehälter 9 zugeführt.

In Abänderung des erläuterten Verfahrens ist es möglich, die Kalkmilch durch Natronlauge zu ersetzen. Ferner ist das Verfahren auch dann anwendbar, wenn das Abwasser zusätzlich zu den Bleiionen auch Kupferionen oder nur Kupferionen enthält.

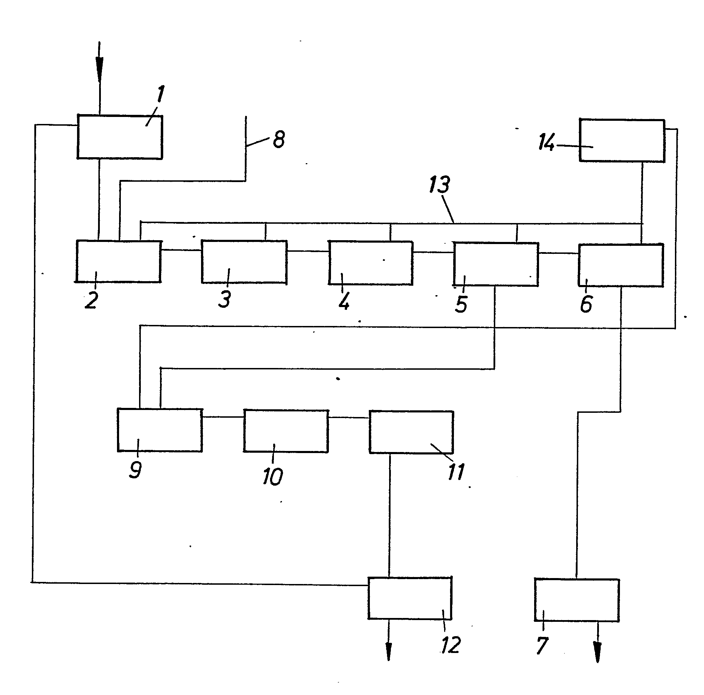

## Ansprüche

1. Verfahren zur Behandlung von Abwasser aus der metallverarbeitenden, insbesondere der drahtherstellenden Industrie, das neben den Eisenionen speziell Blei-und/oder Kupferionen enthält, wobei die Behandlungsprodukte selektiv auf chemisch-physikalischem Wege kontinuierlich erhalten werden, gekennzeichnet durch die Kombination folgender hintereinander ablaufender Merkmale:

a) die Blei-und/oder Kupferionen werden durch Zudosierung einer wäßrigen Sulfidlösung im stark sauren Bereich in einem überstöchiometrischen Verhältnis vorgefällt,

b) die Blei-und/oder Kupferionen werden durch Zudosierung von Kalkmilch oder Natronlauge im schwach sauren Bereich nachgefällt und als Metallsulfidverbindungen abgeschieden und

c) die noch in Lösung befindlichen Eisenionen werden durch weitere Zugabe von Kalkmilch oder Natronlauge bis zum schwach alkalischen Bereich ausgefällt und als Hydroxidverbindungen abgeschieden.

2. Verfahren nach Anspruch I,
dadurch gekennzeichnet,
daß die Vorfällung in einem pH-Bereich zwischen I,5 und 2,5 durchgeführt wird.

3. Verfahren nach Anspruch I oder 2,
dadurch gekennzeichnet,
daß die Nachfällung in einem pH-Bereich von 3,5 bis 4,5 durchgeführt wird.

4. Verfahren nach einem der Ansprüche I bis 3,
dadurch gekennzeichnet,
daß die Ausfällung der Eisenionen (Neutralisationsfällung) in einem pH-Bereich von 8,0 bis 9,5 durchgeführt wird.

5. Verfahren nach einem der Ansprüche I bis 4,
dadurch gekennzeichnet,
daß zur Vorfällung eine 5 bis I0%ige wäßrige Natriumsulfidlösung zudosiert wird.

6. Verfahren nach einem der Ansprüche I bis 5,
dadurch gekennzeichnet,
daß zur Nachfällung eine 5 bis I0%ige Kalkmilch oder Natronlauge zudosiert wird.

7. Verfahren nach einem der Ansprüche I bis 6,
dadurch gekennzeichnet,
daß die vorhandene Sulfidüberschuß durch die noch in Lösung befindlichen Metallionen in der Verfahrensstufe c) eliminiert wird.

8. Verfahren nach Anspruch 7,
dadurch gekennzeichnet,
daß bei mangelndem Restmetallionengehalt der Lösung eine wäßrige Eisensalzlösung zudosiert wird.

9. Verfahren nach einem der Ansprüche I bis 8,
dadurch gekennzeichnet,
daß die abgeschiedenen Blei-und/oder Kupfersulfide durch Zugabe von Kalkmilch oder Natronlauge neutralisiert werden.

I0. Verfahren nach einem der Ansprüche I bis 9,
dadurch gekennzeichnet,
daß der in den mit einem Wassergehalt von 96 bis 98 % abgeschiedenen Blei-und/oder Kupfersulfiden vorhandene Sulfidüberschuß durch die noch in Lösung befindlichen Metallionen eliminiert wird.

II. Verfahren nach Anspruch I0,
dadurch gekennzeichnet,
daß bei mangelndem Restmetallionengehalt eine wäßrige Eisensalzlösung zudosiert wird.

I2. Verfahren nach einem der Ansprüche I bis II,
dadurch gekennzeichnet,
daß das Filtrat der abgeschiedenen Feststoffe in die schwach saure Fällungsstufe (b) abgeleitet wird.

I3. Verfahren nach einem der Ansprüche I bis I2,
dadurch gekennzeichnet,
daß die Behandlungsstufen der selektiven Fällung der Blei-und/oder Kupferionen in geschlossenen Behältern durchgeführt werden.

I4. Verfahren nach Anspruch I3,
dadurch gekennzeichnet,
daß die Behälter an ein Absaugsystem mit einer oxidativen Gaswäsche angeschlossen sind.